## Europäisches Patentamt
## European Patent Office
## Office européen des brevets

(19)

(11) Publication number: **0 007 185**
**A1**

(12) # EUROPEAN PATENT APPLICATION

(21) Application number: **79301178.4**

(22) Date of filing: **19.06.79**

(51) Int. Cl.³: **G 06 K 15/00**
**G 07 C 3/00, G 07 C 11/00**

(30) Priority: **19.06.78 US 916732**

(43) Date of publication of application:
**23.01.80 Bulletin 80/2**

(84) Designated Contracting States:
**BE DE FR GB IT SE**

(71) Applicant: **AM INTERNATIONAL, INC.**
**1900 Avenue Of The Stars**
**Los Angeles California 90067(US)**

(72) Inventor: **Pine, Marmon**
**9029 Sherry Lane**
**Des Plaines Illinois 60016(US)**

(72) Inventor: **Flyn, Henry J.**
**185 Old Sutton Road**
**Barrington Hills Illinois 60010(US)**

(72) Inventor: **Gallagher, Patrick J.**
**348A Mallard Point**
**Barrington Illinois 60010(US)**

(74) Representative: **Tregear, George Herbert**
**Benjamin et al,**
**TREGEAR, THIEMANN & BLEACH Enterprise House**
**Isambard Brunel Road**
**Portsmouth PO1 2AN(GB)**

(54) **Copier control and record keeping apparatus.**

(57) A copier control and record keeping method and system including one or more computer terminals (66) connected to and communicating with a central recorder (60), each terminal (66) having a data base capability and means for memory features for storage of information and sensing authorized access, means for counting the numbers of original and copies made, and means for accumulating data for transmission of the data to a recorder (60), such transmission being effected only when both completion of a cycle and the removal of a coded card from the terminal (66) receptacle have occurred. The apparatus includes means for monitoring and for acknowledging received messages, and a time-delay, keyed priority sensing system for recognizing and identifying each of the terminals (66) and for preventing transmission interference between the various terminals (66) all of which are connected to transmit information to the central recorder (60) on the same line (62). Additional features and capabilities of the apparatus include means for transmitting service requests to the central recorder (60), means for controlling automatically the maximum number of copies that can be made of each original, and means for entry of ancillary data such as the size of the original being copied, and data identifying the party or account to be billed for the copies made.

1

## COPIER CONTROL AND RECORD KEEPING APPARATUS

The office copier has become a necessity of business life. While the convenience and practicality of such devices are unquestioned, the apparatus is susceptible of excessive and unauthorized non-business use. Such use, over and above the proper business use in an office is objectionable in that it places unwarranted demands upon the equipment and results in increased operation costs.

An additional problem associated with the extensive use of copying machines is the difficulty of maintaining records as to the particular client or project for which the copies are made. Lack of such data makes it difficult properly to assess charges against departments or clients. It will be appreciated that the making of copies on the machine may constitute a very significant office expense, and that it is important from an accounting standpoint to be able properly to charge this business expense.

In recent years, several different devices have been developed for dealing with the problems indicated above. Specifically, equipment has been devised which will act to control the use of the machine and which will serve, as well to control and monitor operation. Generally, such apparatus is intended to limit the number of persons using the machine and to count those copies made by each operator or by each department during a given time.

The means for controlling or regulating access to the copier itself have taken various forms including keys and coded cards. Such apparatus has, however, been unduly complex, unreliable, or has failed to provide sufficient record keeping and related data to meet the demands of business. It is, therefore, the aim of the present invention to obviate the shortcomings of the prior art systems and to provide copier control and record keeping equipment which meets the need of modern business methods and procedures.

The present invention constitutes office equipment such as copier control and record keeping apparatus which includes one or more terminals for accumulating, storing and transmitting information and data to a central recorder. The terminals include means for monitoring and for sensing and recording authorized access to the copier and means for counting the number of originals and the number of copies made by the copier.

An additional important feature of the apparatus of the invention is that it includes means for introducing data into a transmission line which connects the terminal and the central recorder and, in the case of a plurality of terminals, the apparatus includes means for establishing a selectable, predetermined priority among the several terminals to regulate the transmission of data from the terminals to the central recorder, thereby to obviate interference between terminals.

Still another important feature of the invention is that the apparatus includes means for monitoring, verifying and for acknowledging messages received at the central recorder from the terminals.

Additional related features include the capabilities of the invention to provide means for transmitting service requests to the central recorder, means for counting the number of originals and copies per original, and means for entry of auxiliary data.

Other and further objectives, advantages and features of the invention will be apparent from the following detailed description considered in conjunction with the drawings.

The invention is described more fully and in greater detail herebelow by way of a specific example with reference to the accompanying drawings in which:

Figure 1 is a block diagram showing the system configuration, including terminals as connected to copiers or other external devices, and to the central recorder, in accordance with the invention;

Figure 2 is a functional block diagram of a single terminal embodying the features of the invention;

Figures 3A-3D are schematic diagrams showing components of the system depicted in Figure 2;

Figure 4 (A and B) are a flow diagram in block form indicating the mode of operation of the terminal; and

Figure 5 is a set of waveforms describing the communication timing sequence.

The aims and objects of the invention are achieved, in a preferred embodiment thereof, by providing a system which includes a computer terminal, or a plurality of computer terminals linked through a single communication conduit similar to the manner in which a party line is connected into a telephone system. A central recorder of the invention collects, manipulates, and adds to the data from all of the computer terminals and records the collected information, e.g., on magnetic media. Alternatively, the collected information may be transmitted to other computer systems.

Preferably each computer terminal is equipped with a card reader, and may be equipped with a keyboard and display. The communication link to the Central Recorder (Central) is bi-directional. That is, it is used to transmit information to as well as receive certain information from the Central Recorder. Control and timing of the communication link will be described later.

Each computer terminal is provided with certain capabilities which allow it to control and monitor external devices or events. A particular aim of the present invention is the control and monitoring of copy machines, although the terminal may also be used to monitor and control other devices such as offset printers, door access, and security systems. The computer terminal may also be used as a general input device for event detection. That is, the card reader may be used to provide information on events occurring outside of the terminal area.

The terminal, which is actually a small computer, has the ability to make decisions, store information which will effect those decisions, and make complex calculations within its own electronics circuitry as well as to control the copier within predetermined specifications. Prior art terminal devices of this type have been restricted to dedicated electronics devices of the non-computer type. These, normally referred to as hard-wired, tend to be limited in scope.

A typical use of the system of the invention is described

4

below. A user inserts a prepunched plastic card into the terminal's card reader. The terminal reads the plastic card, compares code punched into the card with up to four thousand codes stored in its local terminal memory, and decides whether the card is acceptable for use in the system. If the card is found acceptable, the terminal enables the controlled device; that is, in this case a copier. The user may then proceed to run copies on the copier machine. Up to this point, no use has been made of the Central communications link.

Upon completion of the operator's task, the operator removes his card and leaves the machine. At this point, the computer terminal validates the removal of the card, and checks to make sure that the machine has completed its normal cycle. If both events, that is, removal of the card and completion of the set cycle, have occurred, the terminal checks the communications line to see if a message can be transmitted. If the communications line is available, the terminal compiles its message, transmits it to the Central recording device and waits for a return message or confirmation acknowledging the accurate receipt of its own transmission at the Central. Upon receipt of the responded acknowledgement, the terminal has completed its cycle and resumes a quiescent state. During this quiescent state the terminal is "looking" for additional user cards or "watching" the communications line for transmissions from the Central device bearing information relating to card user identification.

It is important to appreciate that the terminal establishes communications with the Central recording device only after a specific set of events have occurred. Since the terminal is a microprocessor, that is, a small computer, the number of events which must occur and the nature of these events are quite complex and are controlled only by the program designed for the controller terminal. Additionally, the terminal has its own memory, and therefore, can store locally information on valid card numbers. Therefore, it need not communicate with the Central controller prior to granting access to a machine. Prior art systems do not provide this memory feature, requiring instead that a controlling device communicate with the Central recording device to find out if card numbers are valid.

Additional important features of the computer terminal of the invention are described below. One of these is the communications link. When a plurality of computer terminals or communicating devices are connected to a single communications line, means must be provided for separating the transmissions from one terminal so that they do not interfere with transmissions from other terminals on the same line. In general, prior art systems have dealt with this problem by either "tuning" terminals for different frequencies of transmission or by a technique normally referred to as "polling".

When "tuning" is used, the device receiving a transmission from any one of various terminals then must decode the frequency at which that transmission was received and determine which terminal was the sender. This approach is very limited, among its drawbacks being problems relating to creating a number of terminals on the same system, each adjusted to a different frequency and with the frequencies separated sufficiently from each other to allow detection from a Central device.

When "polling" is used, the Central device sequentially transmits permission for each terminal to transmit and allocates a time period for the selected terminal to respond. In the absence of a terminal response to the Central's "poll", the Central "polls" the next terminal in line. If a terminal responds to its poll with a transmission, the Central processes the transmission and then proceeds sequentially to the next terminal on the polling list.

This approach is also limited, requiring extensive knowledge during manufacturing as to the number of terminals in the system making it cumbersome to add new terminals during the course of normal operations. Another drawback is the actual time consumed during the "polling" cycle which prevents transmissions from a given terminal until the Central sequences through all other terminals on the system. This time can cause a terminal user to wait ten to twenty seconds for access to the system, a waiting period usually unacceptable for purposes of controlled access to devices such as copiers and printing equipment.

6

The present invention overcomes the problem posed by tuning and polling by providing a novel priority sensing system. The priority sensing system works in much the same manner as the "party line" of a telephone company in which a group of users share a single telephone line. When a user wishes to speak on that line, he first listens to see if the line is currently in use by others. If it is, he waits until the line is clear, listening continuously until all conversation has ceased on the line. At that point, the waiting party begins to talk. This system can work quite well with the following limitation. If two parties desire to use a busy line at the same time, they will both listen until conversation ceases on the line and then they will both begin to dial the number each wants. In this case their actions will interfere with each other. That is, no useful information can be transmitted on the line when two parties attempt to use it simultaneously. The solution to this problem is the individual terminal priority system of the invention. Each terminal is assigned a "priority number". That priority number becomes the basis for and is correlated with an interval of time which is calculated by the computer within the terminal. This allotted time interval is unique to each terminal and different than the time interval for every other terminal. If two or more terminals seek to communicate with the Central at the same time, the priority time interval schedule establishes which terminal has first claim on use of the communications line. An example of this follows:

Assume that three terminals are holding messages waiting for the line to clear so they may transmit to the Central. At some point in time the line goes clear. That is, all communications on the line cease. Each terminal senses the clear line since all share the same communications line. Upon sensing the clear line each terminal begins a timing period or delay proportional to or correlated with its own assigned priority interval. Since all priority intervals are different, one terminal of the three will complete its timing interval before the other two. At that instant the terminal having the shortest priority interval begins to transmit its message to the Central.

The remaining terminals, each of which has been timing through its own priority interval, detect that there is now activity on the line. This causes each computer to reset its own priority interval to zero and wait again for the line to clear. Thus, each terminal has a priority interval assigned providing the ability to sort out its place in line and thus avoid interference with any other terminal's communications.

The method for assigning priority numbers to each terminal is simple. During production a number of switches are set in the electronics of the terminal. The microprocessor computer monitors the switches and incorporates the code established by these switches as the basis for its own priority interval. Thus only one code is assigned to a particular computer, and that terminal can separate itself from all other terminals on the system.

An additional feature of the system of the invention is the variable message length of the communications between the terminal and the Central recorder. This is sometimes referred to as "exact run length". This means that when an operator changes originals in the copier, the terminal detects the change in the timing rhythm of copy reproduction and records the exact number of copies run on each original. This process can be repeated for up to fifty (50) originals, each original having the capacity of sixtyfive thousand copies. The terminal handles the actual run length situation by changing the length of its message to the Central recording device. That is, if only one original change occurs, the message to the Central recorder contains only one field of copy information. However, if thirty originals were to occur, the message to the Central recorder would contain thirty separate fields each containing copy counts for each original. This is called variable length message and is automatically controlled by the computer in each terminal. When the capacity of the terminal to store count information is exceeded, that is, more than fifty originals are changed, the terminal automatically transmits a complete message and starts fresh on the next original. This event is undetected by the operator and the operator's process is not interrupted by this transmission.

8

Of additional interest is the ability of the microprocessor and terminal of the invention to store information for card users. A periodic message is transmitted from the Central recorder and received by all terminals. This message contains updating information on up to four thousand card user codes. Each terminal receives the information, stores it in its own local memory, and uses this local memory as a data base which is changed in the Central recorder from time to time. All the new information is updated within a few moments at each of the terminals on the communication network.

It is important to understand the difference between the subject terminal and prior art devices. The terminal of the invention, because it is a computer in its own right, operates completely independently of the Central recording device. That is, it is capable of evaluating its own environment and responding, based on inputs from the copier, and badge reader, and keyboard or other events. It is only upon satisfactory completion of these events that the terminal makes an active decision to transmit to the Central recorder. The nature of the decision is variable, since the terminal is a programmable device. The system may vary from time-to-time based on conditions under which the terminal transmits to the Central recorder. These conditions may be changed by changing the program which is contained in the Central itself. The transmission to the Central recorder is totally independent of the Central recorder and is totally independent of any other terminal's activities. The constraint, hereby, on this independence is that the terminal may never interfere with another terminal's communication and will always yield the communication line to a higher priority terminal, that is, one with a lower assigned priority number. The priority sensing system provides means of unique implementation.

Although a microprocessor terminal or computer base terminal has never been applied to this type of system before, most of the techniques for sensing events controlling keyboards and displays that are used by the terminal are related to those used throughout the computer industry and other types of devices. It is

9

primarily in a communications linkage of the instant system and the unique combination of component elements and functions that the novelty of the present invention lies.

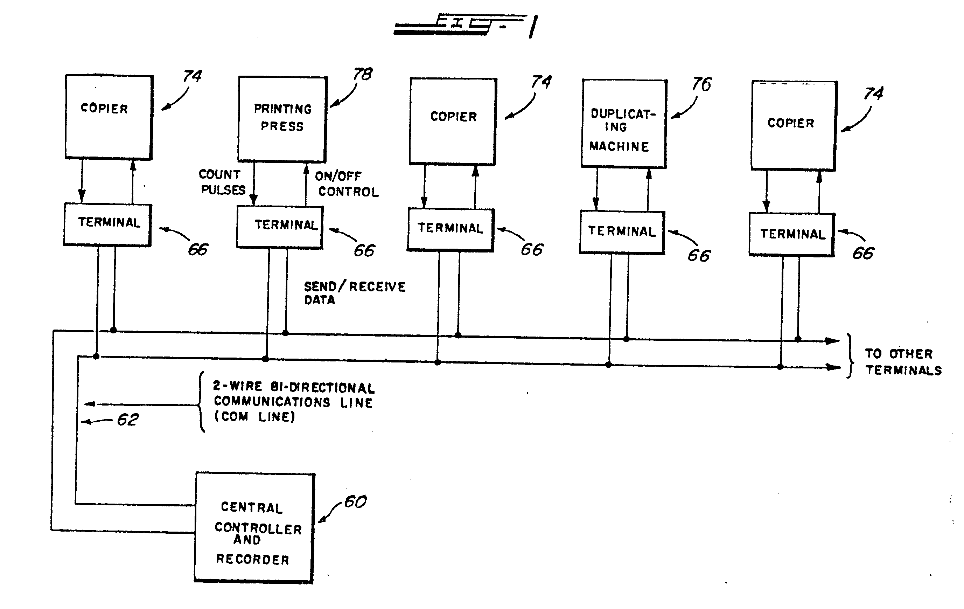

Referring now more particularly to the drawings, Figure 1 is a system configuration block diagram drawing of the Computer Terminal (Terminal linked through a communications circuit to a Central Recorder or Central Processing Unit (CPU), and simultaneously linked to one or more other terminal devices. The various copier, printing and duplicating devices indicated in Figure 1 do not constitute a part of the invention. Accordingly, no detailed description of these is provided herein. Any pair of wires, linked between the terminals and the Central Recorder, will satisfy the requirements for the 2-wire, bi-directional communications line. For example, a standard voice-grade, telephone hook-up between the terminal points would suffice.

Figure 2 is a functional block diagram of the computer terminal. As indicated, a microprocessor computer or Central Processing Unit 10 is equipped with program memory 12, and additional memory referred to here as card status memory 16, and computer working memory 18. Also, as shown by Figure 2 the CPU sends control information to the program memory 12 and receives data from the program memory, representing computer instructions. The CPU also sends control information to the card status memory 16 and the computer working memory 18. With these two memory elements, data are exchanged in both directions. That is, the CPU may send these memories data as well as receive data from the memory. The direction of data exchange is controlled by the CPU.

Crystal timing circuits 22 provide an accurate time base for various of the computer activities. The computer 10 uses this time base to sequence through instructions received from the program memory 12 in a regular and orderly fashion. By this technique, those events monitored and controlled by the CPU 10 may be accurately timed and repeated within millionths of a second.

Input Selector Circuits 24 link the CPU 10 with communications receive circuits 26, run length and communications priority switches 32 and 34, service switch 36, copy count circuits

38, and copy count timing switches 40, as well as a card reader 42, and a keyboard 44. In effect, the Input Selector Circuits 24 allow the CPU 10 to monitor external events. That is, the CPU 10 provides control information to the Input Selector Circuits 24; whereupon data from one of the external events (26 and 32-44) are selected and routed to the CPU 10 by the Input Selector Circuits 24. In this manner, the computer monitors any event occurring at any of the selected component elements.

In addition to monitoring external events via the Input Selector Circuits 24, the CPU 10 also causes external events to occur using the transmit circuits 48 and the Output Selector Circuits 50.

When the computer 10 has a message which is to be transmitted to the Central Recorder 60 (See Figure 1) for subsequent recording on magnetic media, the computer 10 sends data to the transmit circuits 48 which relay the data to the two-conductor communications line 62 between the terminal 66 and the central controller 60. If the CPU 10 wishes to display certain information on the terminal display 70, or wishes to illuminate certain indicator lights 72 on the front panel of the terminal 66, or wishes to turn a control device such as a copier 74, or duplicating machine 76, or printing press 78, on and/or off, the computer 10 sends control information to the Output Selector Circuits 50. This control information is decoded by the Output Selector Circuits 50 which then enable the selected device to receive data from the CPU 10. The CPU then sends data to that device through the Output Selector Circuits 50 for either display or control purposes.

As can be seen from Figure 2, the CPU 10 can monitor external events and can control external events via the use of the input and output selector circuits 24 and 50, or directly as in the transmit circuits 48. It is through this means that the computer 10 can perform such operations as reading a plastic card inserted into a card reader 42, detecting data keyed into its keyboard, communicating with other terminal devices, and controlling duplicating, copying and printing devices.

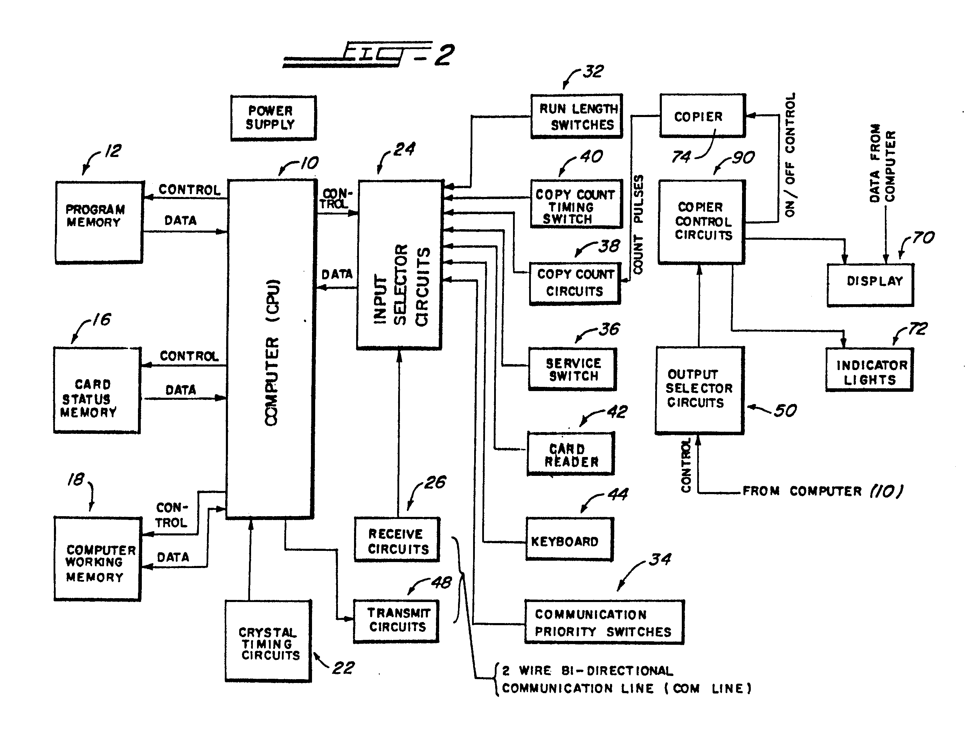

Figure 3 is a schematic diagram of a terminal in accordance with the invention. The computer 10 is a commercially available microprocessor. The memory elements 12, 16 and 18 are also commercially available and are commonly used in computer systems. Program memory 12, a read-only memory (ROM), is used to store computer instructions or programs. Card status memory 16 and computer working memory 18 are random access memory (RAM) units used to store variable information from the CPU 10. This information may be both stored and retrieved by the CPU 10; i.e. it is bi-directional. There is no need herein further to describe the CPU 10 or the memory elements 12, 16 and 18 as they are well known to those skilled in the relevant art.

When the CPU 10 wishes to communicate with any of the memory elements, it "addresses" that particular memory element. That is, it provides coded data via its address line 82 shown in Figure 3A as a0 through a14 of the CPU 10 to all memory elements. The data are interpreted by the memory chip as a unique code. The coded data identifies only one of the devices, or circuit component, e.g. memory unit, input and output selector circuits, and transmit circuit, and, therefore, is responded to by only one of the devices. This technique, called "addressing" is used whenever the CPU 10 wishes to correspond with a particular device. In all cases only the addressed device recognizes a specific code and responds to it.

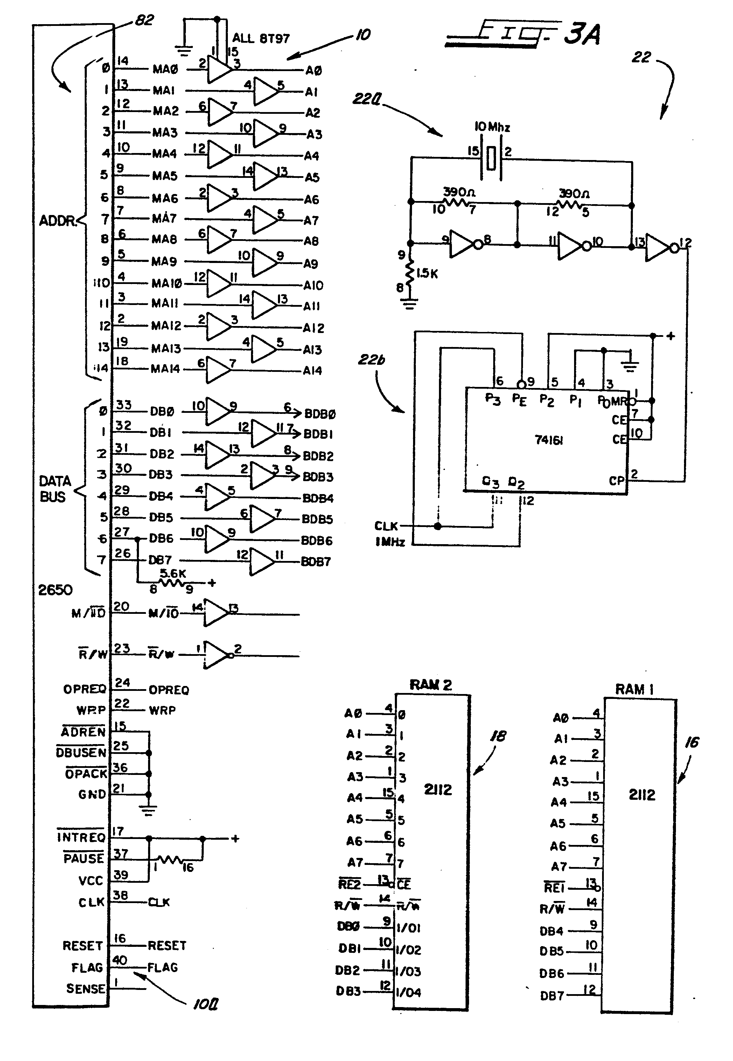

The crystal timing circuits 22 (Figure 3A) are used by the CPU 10 to set up timing references. A ten megahertz crystal 22a is used in conjunction with various resistors and commercially available integrated circuits to provide a 10 megahertz timing signal to commercially available integrated circuits 22b. Circuit 22b divides down the 10 megahertz signal, to provide 1 megahertz timing signal (Figure 5A) which is then delivered to the CPU 10. This timing signal, Figure 5A, serves as the timing base for all CPU 10 operations.

Referring now to the Input Selector Circuits 24, electronic signals representing external events are continuously applied to pins 0 through 7 (Figure 3B). When the computer 10 addresses the Input Selector Circuits 24, one of these input events is determined by the unique code presented to the Input Selector Circuits 24 from the CPU 10. Information on the selected event is then transmitted to the CPU 10. By this means the CPU 10 can monitor any external event connected to a pin on the Input Selector Circuit 24. For example, referring to Figure 3B, the CPU provides an address for line one (1) which is a "card present" event. This "card present" event signifies that a card has been inserted into the card reader 42. The computer 10 repeatedly requests information from the Input Selector Circuits 24 using the address of the "card present" event. Until a card is inserted into the card reader, the information transferred to the computer 10 would indicate no card present. As soon as the card is inserted, the information to the computer 10 indicates the card present.

By this means the computer 10 monitors external events such as keys depressed on the keyboard 44, copy counts 38 (Figure 3D) switches on the front panel such as the operator button 36 (Figure 3D) information available on the bi-directional communications line from the receive circuits 26, Figure 3C, and the status of various switches which are preset during manufacturing to provide different time constants 24 for different copy devices.

From time to time the CPU 10 may provide the addresses of each of these external events to the Input Selector Circuits 24 in sequence, and upon completing its scan through these events, repeat the scan. It may do this continuously, looking for a particular event to occur. This sequencing of addresses is called polling, and will be referred to further with respect to computer operations.

The receive circuits 26 for the communications line (com. line) 62 are also shown in Figure 3C. When information is present on the communications line 62 shown as COMLB and COMLA, this information is processed through elements 26a and through isolation phototransistor 26b to amplifier 26c (Figure 3C). That is, any signal to the communications line 62 will be processed and appear at pin 1 of 26c. This signal, called "com busy" is presented to the Input Selector Circuits 24. By addressing the "com busy" input on the Input Selector Circuit 24, the central recorder 60 is able to receive information on the communications line 62. It is by this technique that messages from the central recorder 60 are received by the terminal CPU 10.

Referring again to Figures 2 and 3, communications priority switches 34, Figure 3C, copy count timing switches 40, Figure 3D, and run length switches 32, Figure 3D, are all identical. They consist of groups of single-pole, single-throw switches whose positions represent control information on certain events monitored by the computer 10. These switches are normally set at manufacture. By addressing any of these switches individually through the Input Selector Circuits 24, the CPU 10 can detect the position of the switches and determine parameters which affect certain functions in the CPU 10. In general, these switches are used to alter time constants related to various devices or functions. From time to time they may be used to instruct the CPU 10 to include or omit certain special features in its program.

It can be recognized that card reader 42 and keyboard 44, Figure 3B, are represented by groups of switches similar to switches just described. That is both card reader 42 and keyboard 44 are arrays of single-pole, single-throw switches. The same description applies to the switches of the card reader and the keyboard as to all the switches just discussed. That is, when the computer 10 wishes to scan the keyboard 44 or scan the card reader 42 it does so by addressing, sequentially, each of the switches in the device and assembling the information from each of those switches into a code representing a card code or a key depressed on the keyboard 44. These techniques are well known to practioners of the computer art.

In order to transmit a message to the central recorder 60, the computer 10 uses the transmit circuits 48, Figure 3C. A signal from the computer 10 is applied to the input of the transmit circuits 48 (flag 48a or 10a), Figure 3A. This signal is processed by transistor Q1, 48b, further processed by photo transistor A1, 48c, and applied by transistor Q2, 48d, Figure 3C, to the communications line 62.   Thus, by controlling the inputs to the transmit circuit 48, the computer 10 is able to send any information to the communications line 62, which it desires. This is the only output control function which the computer 10 performs directly.   All other output control functions are performed through the Output Selector Circuit 24.

To turn on, or enable, the copier or other controlled external device, the CPU 10 provides an address to the Output Selector Circuits 50 which activates that particular output which is to be controlled.   For example, the CPU 10 might provide a code to the Output Selector Circuits 50 which would turn on output No.7, 50a, from the Output Selector Circuits 50, Figure 3B. This output is provided to the copier enable circuits 90 which then turns on relay K1, 90a, (Figure 3D) closing contacts for that relay and enabling the copier to run.   Through a similar means, the CPU 10 provides information to the Output Selector Circuits 50 which would enable display 70, Figure 3B, to receive data from the CPU 10 concerning information to be displayed.   In a similar manner the CPU 10, via the Output Selector Circuits 50, can enable or illuminate indicator lights 72 for specific output functions such as light emitting diodes 72 used to illuminate the front panel. It is by the means of the previously described addressing of various devices that the computer is able to control and monitor external events.

Figure 4 is a flow chart of the operation of the Terminal 66.   When the Terminal 66 is initially energized, i.e. plugged in, the CPU 10 clears the internal memory 12, 16 and 18 (Figure 2) and sets the initial conditions for the CPU to "clear" 100.   The CPU 10 then polls for the insertion of a card 102 into the Card Reader 42, or for a broadcast 104 from the Central Recorder 60, Figure 1.

When the CPU 10 detects a broadcast 104 via its Receive Circuits 26, the CPU 10 determines if it is a valid message 106. If the message is not valid, the CPU 10 once again polls for a card 102 or another broadcast 104.   If the message is valid, the CPU 10 stores the card status information 110 in memory 16 and returns to polling for a broadcast 104 or a card present 102.

When the CPU 10 detects a card present 102, the CPU 10 reads the card and compares the card code to the card status memory 112. If the card is not valid the rejected card light flashes 114 and the CPU 10 polls for card removal 116. Once the card is removed, the CPU 10 returns to polling for another card present 102 or for a broadcast 104. If the card is found valid 120, the copier or other external device is enabled 122. The CPU 10 then polls for a keyboard entry 124, copy count pulse 126 or service request 128.

If keyboard depression is detected 124, the CPU 10 processes the key depressed 130, and loads the numeral onto the display 132. The CPU 10 returns to polling for further keyboard depressions 124, a copy count pulse 126 or a service request 128.

If a copy count pulse is detected 126, the CPU 10 reads the "copy count timing switches" 136, and then checks the time between copy count pulses for an "original change" 138. For each copy/original, the copy/original counter 140 is incremented by one. The CPU 10 polls for the card being present 142, and if the card is present, the CPU 10 returns to reading the copy counts switches 136.

Figure 5 shows the communications timing. Line A of Figure 5 shows the waveform of the timing circuit 22 in Figure 3. When the card is not present 142 (Figure 4), the CPU 10 polls the receive circuits 26 for a clear com line 144. This is shown on Figure 5B. During $t_1$, the receive circuit is busy. Once a clear com line is detected ($t_2$) (Figure 5B), the CPU 10 reads the "com priority switches" 34, and establishes its time interval 146. The transmission of the message is delayed for the time interval, while the CPU 10 polls the com line for remaining clear 150 (Figure 4). This is shown in Figure 5, as waveform C during $t_2$.

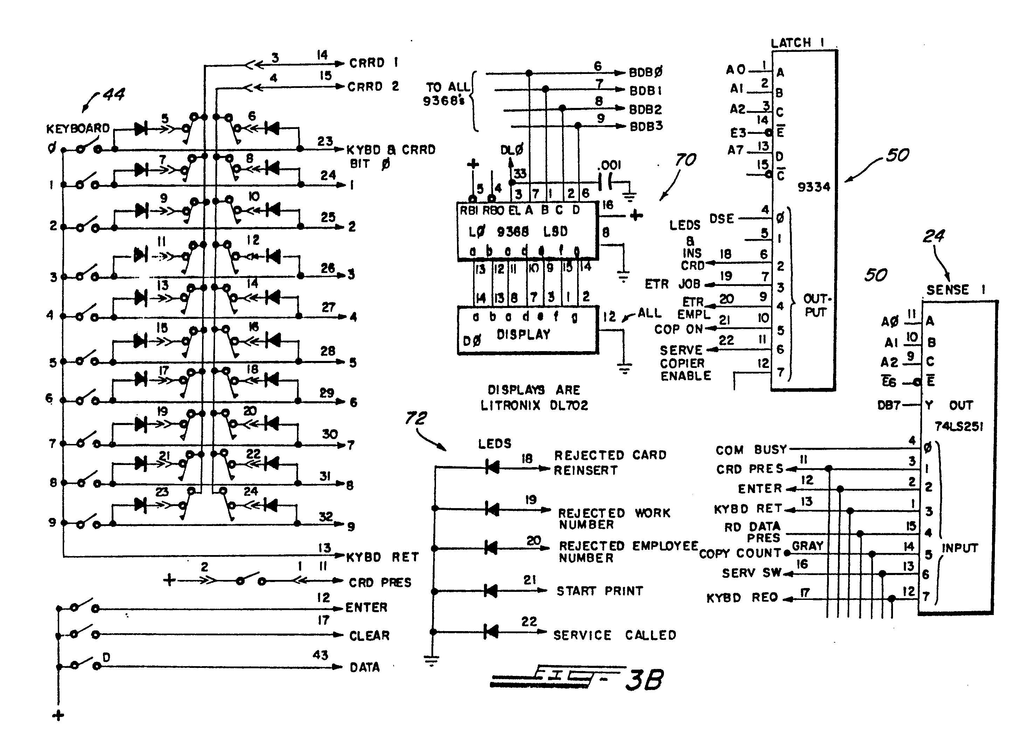

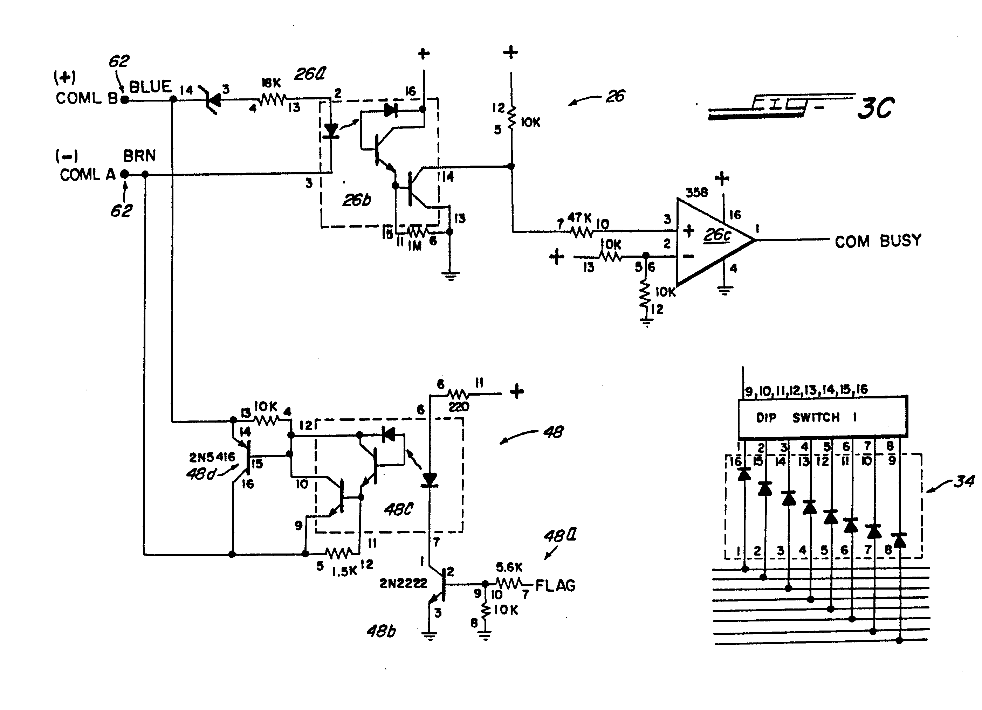

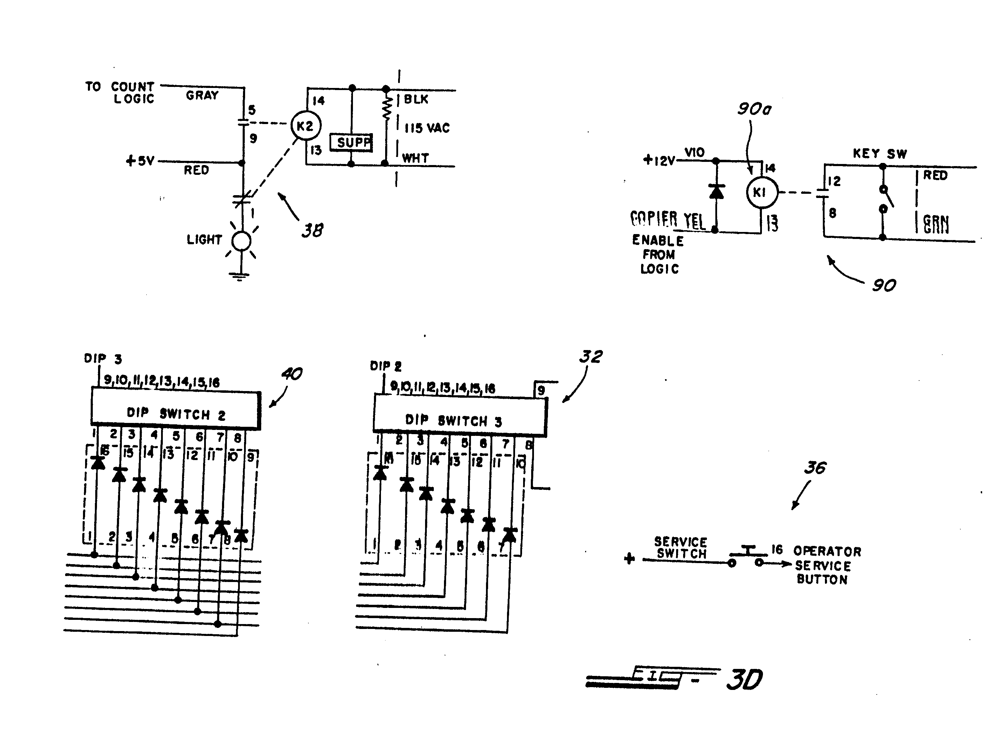

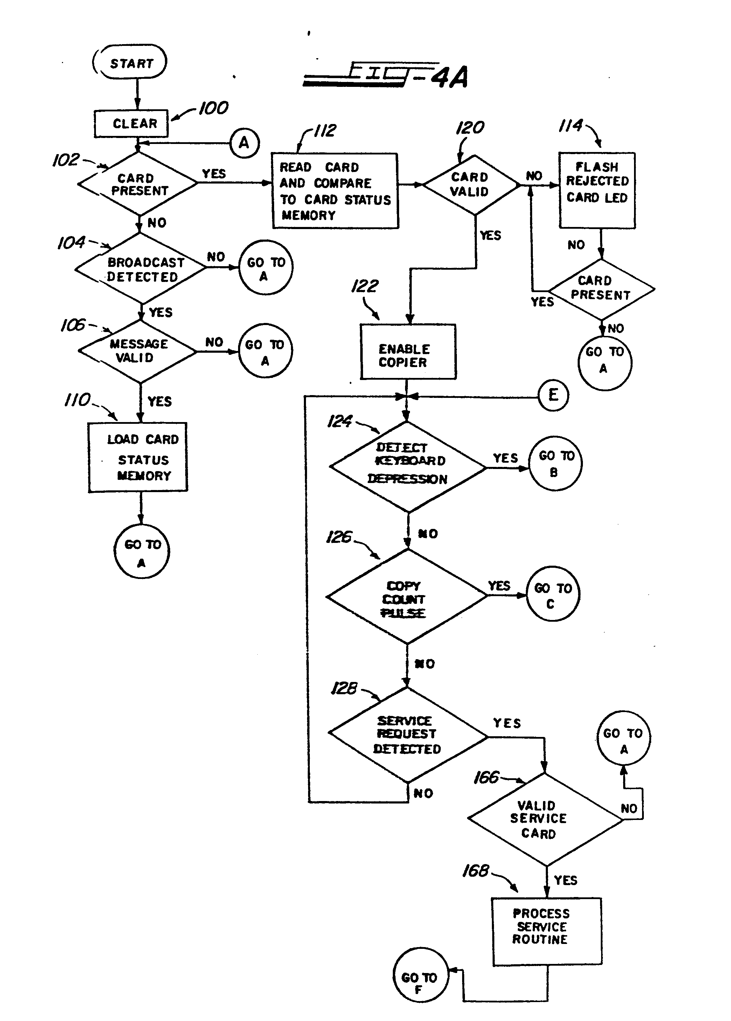

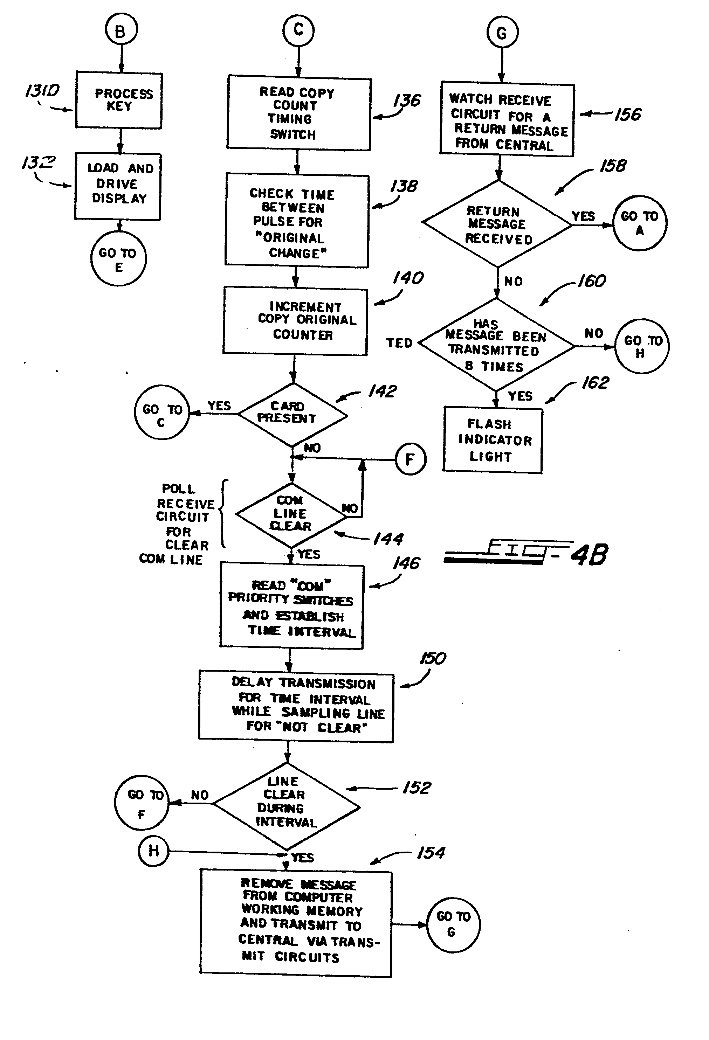

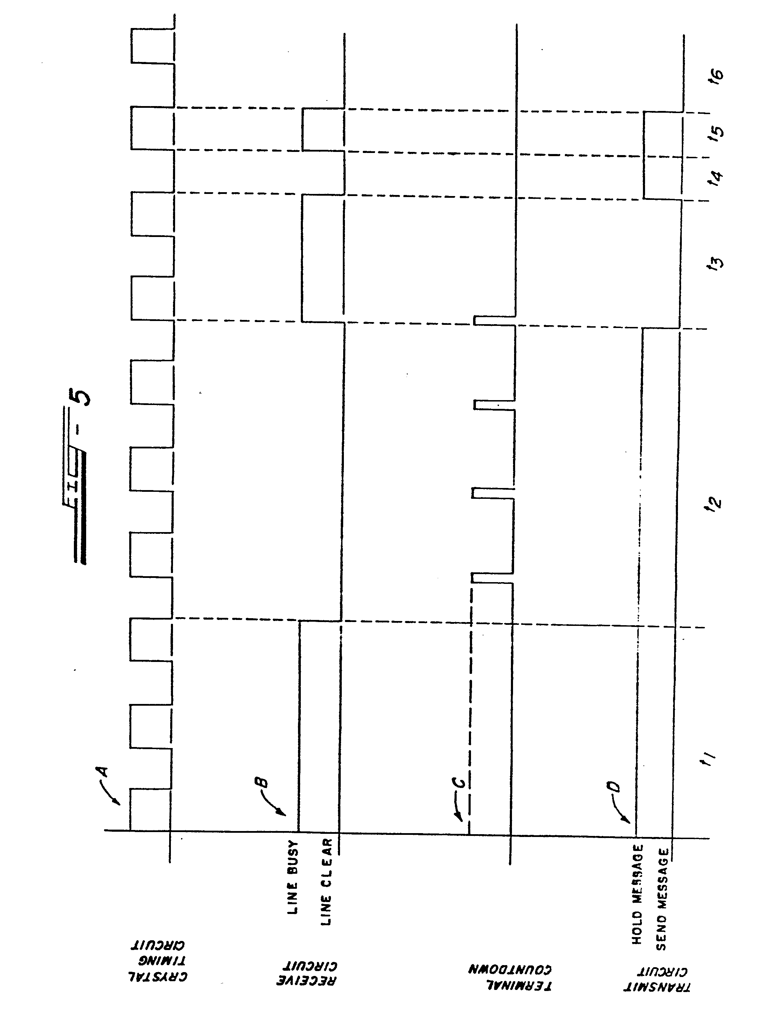

If the com line becomes busy during the time interval, the CPU 10 returns to polling the com line for a clear com line 144. Once the com line is clear, the CPU 10 reads the time interval again 146. If the com line is clear during the time intervals $t_2$, the message is removed from the CPU's working memory 18 and the message is transmitted to the Central Recorder 60 via the transmit circuits 26 (Figure 4-154). This condition is shown in Figure 5D. The

16

message is held from $t_1$ and $t_2$ and is transmitted during $t_3$. The CPU 10 watches for a return message from the Central Recorder 60 (Figure 4-156). When a receive message is detected 158, the CPU 10 returns to polling for a card present 102 or a broadcast 104. The return message is shown in Figure 5B during $t_4$. If a return message is not received (Figure 4-158), the CPU 10 transmits the message again 154. This is shown on Figure 5D during $t_5$. After the eighth transmission of the message 160 and a return message is not received, the indicator light 72 flashes 162.

When the CPU 10 detects a service request 128 (Figure 4), the card code is compared to the card status memory 16 to determine if it is valid for service. If the card is invalid, the CPU 10 returns to polling for another card present 102 or for a broadcast 104. If the card is valid for service, the service routine is processed 168 and the CPU 10 polls the receive circuits 26 for a clear com line 144. The message is transmitted in the same manner as a copy message 146-162.

While a preferred commercial embodiment of the novel control and record keeping apparatus of the invention has been illustrated and described, it is understood that the same is capable of modification and that such modifications may be made without departure from the spirit and scope of the invention as defined in the appended claims.

Claims:

1. A copier control and record-keeping apparatus, including electrical conductor means connecting said apparatus to a copier, said apparatus comprising:

a central recorder,

terminal means for accumulating, storing, and transmitting information and data to said central recorder,

said terminal means including means for monitoring and for sensing authorized access to the copier,

means for counting the number of originals copied by the copier,

means for counting the number of copies made of each original copied by the copier,

transmission line means interconnecting said terminal means and said central recorder,

said apparatus including means for introducing data into said transmission line means from said terminal means for delivery to said central recorder.

2. The apparatus as set forth in Claim 1 wherein said terminal means includes a plurality of terminals, and further comprising:

means controlling and regulating input of data into said transmission line means from each of said terminals to obviate interference therebetween.

3. The apparatus as set forth in Claim 2 and further comprising means for establishing a selectable predetermined priority among said plurality of terminal means for organizing the transmission of data from said plurality of terminal means to said central recorder.

4. The apparatus as set forth in Claim 1 and further comprising means for monitoring and for acknowledging messages received at said central recorder from said terminal means.

5. The apparatus as set forth in Claim 2 wherein data transmitted from said plurality of terminal means to said central recorder traverse a common transmission line.

6. The apparatus as set forth in Claim 1 and further comprising means to transmit service requests to said central recorder, including means to monitor and to validate such service requests.

7. The apparatus as set forth in Claim 1 and further comprising card means for obtaining access to said apparatus and means to authenticate said card means as a prerequisite for permitting access to said apparatus.

8. The apparatus as set forth in Claim 2 and further comprising means for establishing a predetermined time delay interval for each said terminal means with reference to a clear transmission line condition sensed by each said terminal means upon initiation of steps to effect transmission from each said terminal means.

9. The apparatus as set forth in Claim 3 wherein said means for establishing priority among said terminal means includes counter means, and means correlating each specific said terminal means with a corresponding specific said priority.

10. The apparatus as set forth in Claim 3 and further comprising variable switch means, and means for setting said variable switch means to establish a unique time base for each of said terminals to establish said predetermined priority among said terminal means.

11. The apparatus as set forth in Claim 1 wherein said means for counting the number of originals copied by said copier includes means to sense time delays between successive copies made on said copier including means to differentiate between time delays between successive copies made sequentially from a given original and a different, somewhat greater time delay correlated with a change in an original to be copied.

FIG. 1

FIG-2

2/3

0007185

FIG. 3A

FIG-3B

DISPLAYS ARE LITRONIX DL702

FIG-3C

5/9

0007185

TO COUNT LOGIC   GRAY

5

9

K2

13   SUPP

14   BLK

115 VAC

WHT

+5V   RED

LIGHT

38

90a

+12V   VIO   14

K1

COPIER YEL   13

ENABLE
FROM
LOGIC

KEY SW

12

8

RED

GRN

90

DIP 3

9,10,11,12,13,14,15,16

DIP SWITCH 2

1   2   3   4   5   6   7   8
16  15  14  13  12  11  10  9
1   2   3   4   5   6   7   8

40

DIP 2

9,10,11,12,13,14,15,16

9

DIP SWITCH 3

1   2   3   4   5   6   7   8
16  15  14  13  12  11  10

32

36

SERVICE
SWITCH   16   OPERATOR
SERVICE
BUTTON

6/9

FIG - 3D

000718

FIG-4A

B

*131D* PROCESS KEY

*132* LOAD AND DRIVE DISPLAY

GO TO E

C

*136* READ COPY COUNT TIMING SWITCH

*138* CHECK TIME BETWEEN PULSE FOR "ORIGINAL CHANGE"

*140* INCREMENT COPY ORIGINAL COUNTER

*142* CARD PRESENT — YES → GO TO C

NO

F

POLL RECEIVE CIRCUIT FOR CLEAR COM LINE

*144* COM LINE CLEAR — NO

YES

*146* READ "COM" PRIORITY SWITCHES AND ESTABLISH TIME INTERVAL

*150* DELAY TRANSMISSION FOR TIME INTERVAL WHILE SAMPLING LINE FOR "NOT CLEAR"

*152* LINE CLEAR DURING INTERVAL — NO → GO TO F

H — YES

*154* REMOVE MESSAGE FROM COMPUTER WORKING MEMORY AND TRANSMIT TO CENTRAL VIA TRANSMIT CIRCUITS → GO TO G

G

*156* WATCH RECEIVE CIRCUIT FOR A RETURN MESSAGE FROM CENTRAL

*158* RETURN MESSAGE RECEIVED — YES → GO TO A

NO

*160* HAS MESSAGE BEEN TRANSMITTED 8 TIMES — NO → GO TO H

TED

YES *162*

FLASH INDICATOR LIGHT

FIG-4B

FIG-5

## European Patent Office

### EUROPEAN SEARCH REPORT

| | DOCUMENTS CONSIDERED TO BE RELEVANT | | CLASSIFICATION OF THE APPLICATION (Int. Cl.³) |
|---|---|---|---|
| Category | Citation of document with indication, where appropriate, of relevant passages | Relevant to claim | |
| | US - A - 3 378 831 (METCALF) <br> * column 1 * <br> -- <br> FR - A - 2 223 760 (XEROX) <br> * page 2 * <br> -- | 1 <br><br><br> 1,2 | G 06 K 15/00 <br> G 07 C 3/00 <br> G 07 C 11/00 |
| A | US - A - 4 065 661 (JASKOWSKY) <br> * complete document * <br> -- | | |
| A | DE - A - 2 441 339 (A. CARRUS et al.) <br> * complete document * <br> ---- | | **TECHNICAL FIELDS SEARCHED (Int.Cl.³)** <br><br> G 06 K 15/00 <br> G 07 C 3/00 <br> G 07 C 11/00 |

**CATEGORY OF CITED DOCUMENTS**

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

| X | The present search report has been drawn up for all claims | | |
|---|---|---|---|
| Place of search <br> Berlin | Date of completion of the search <br> 20-09-1979 | Examiner <br> ZOPF | |

EPO Form 1503.1  06.78